# EUROPEAN PATENT APPLICATION

(11) **EP 4 826 413 A2**
(43) Date of publication of application: **21.10.2026**
(21) Application number: 26171637.7
(22) Date of filing: 10.04.2026
(51) Int. Cl.: G01S 13/75, G01S 5/04, G01S 13/87, H01Q 1/22, H01Q 3/00

(54) **RADIO FREQUENCY IDENTITY (RFID) TAG READER COORDINATION**

(30) Priority: 14.04.2025 US 202519178499
(71) Applicant: T MOBILE INNOVATIONS LLC, Overland Park KS 66251-2100 (US)
(72) Inventor: HOU, Pei, Centreville, 20120 (US); PERLOW, Harry William, Palm Harbor, 34683 (US); RAMAN, Bharatwajan, Arlington, 22203 (US); SATAPATHY, Durga Prasad, Ashburn, 20148 (US)
(74) Representative: Suddaby, Mark Edward

(57) **Abstract**

A method of reading a radio frequency identity (RFID) tag. The method comprises transmitting a first RFID tag energization signal by a first RFID tag reader towards a first location associated with a first RFID tag; transmitting a second RFID tag energization signal by a second RFID tag reader towards the first location associated with the first RFID tag; and while the first RFID tag reader continues to transmit the first RFID tag energization signal and while the second RFID tag reader continues to transmit the second RFID tag energization signal, receiving a transmission of information by the first RFID tag reader from the RFID tag.

## Description

### CROSS-REFERENCE TO RELATED APPLICATIONS

### STATEMENT REGARDING FEDERALLY SPONSORED RESEARCH OR DEVELOPMENT

### REFERENCE TO A MICROFICHE APPENDIX

### BACKGROUND

Radio frequency identity (RFID) tags are passive semiconductor devices that may be affixed to various items for conducting electronic scans and inventory control functions. The RFID tags typically do not have self-contained electric power sources and harvest electrical power from ambient radio frequency fields. When powered and/or hailed by an RFID tag reader device, the RFID tags may broadcast information wirelessly via an antenna and radio transmitter on-board the RFID tag

### SUMMARY

In an embodiment, a method of locating a radio frequency identity (RFID) tag is disclosed. The method comprises transmitting a first plurality of radio sounding signals in a first plurality of angular directions by a first RFID tag reader using a first beam forming antenna of the first RFID tag reader, wherein the first RFID tag reader sweeps a beam of the first beam forming antenna through a first angular arc; receiving a first plurality of backscatter signals from the RFID tag by the first RFID tag reader; determining a received signal strength indication (RSSI) of each of the first plurality of backscatter signals by the first RFID tag reader; and determining by the first RFID tag reader which of the first plurality of backscatter signals is associated with a highest RSSI of the first plurality of backscatter signals and a first angular direction associated with the highest RSSI of the first plurality of backscatter signals. The method further comprises transmitting a second radio sounding signal in a second plurality of angular directions by a second RFID tag reader using a second beam forming antenna of the second RFID tag reader, wherein the second RFID tag reader sweeps a beam of the second beam forming antenna through a second angular arc; receiving a second plurality of backscatter signals from the RFID tag by the second RFID tag reader; determining a received signal strength indication (RSSI) of each of the second plurality of backscatter signals by the second RFID tag reader; and determining by the second RFID tag reader which of the second plurality of backscatter signals is associated with a highest RSSI of the second plurality of backscatter signals and a second angular direction associated with the highest RSSI of the second plurality of backscatter signals. The method further comprises, based on the highest RSSI of the first plurality of backscatter signals and the associated first angular direction associated with the highest RSSI of the first plurality of backscatter signals and based on the highest RSSI of the second plurality of backscatter signals and the associated second angular direction associated with the highest of the second plurality of backscatter signals, determining a location of the RFID tag.

In another embodiment, a method of reading a radio frequency identity (RFID) tag is disclosed. The method comprises transmitting a first RFID tag energization signal by a first RFID tag reader towards a first location associated with a first RFID tag; transmitting a second RFID tag energization signal by a second RFID tag reader towards the first location associated with the first RFID tag; and while the first RFID tag reader continues to transmit the first RFID tag energization signal and while the second RFID tag reader continues to transmit the second RFID tag energization signal, receiving a transmission of information by the first RFID tag reader from the RFID tag.

In yet another embodiment, a method of reading a radio frequency identity (RFID) tag is disclosed. The method comprises steering a first antenna beam of a first RFID tag reader towards the RFID tag as the RFID tag moves in an environment, wherein at a first time the first RFID tag reader controls communication with the RFID tag and operates in a control mode towards the RFID tag and at a second time the first RFID tag reader operates in a standby mode towards the RFID tag; and steering a second antenna beam of a second RFID tag reader towards the RFID tag as the RFID tag moves in the environment, wherein at the first time the second RFID tag reader operates in the standby mode towards the RFID tag and at the second time the second RFID tag reader controls communication with the RFID tag and operates in the control mode towards the RFID tag.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2A and FIG. 2B are a flow chart of a method according to an embodiment of the disclosure.
FIG. 3 is a flow chart of another method according to an embodiment of the disclosure.
FIG. 4 is a flow chart of yet another method according to an embodiment of the disclosure.
FIG. 5 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The present disclosure teaches collaboration among a plurality of radio frequency identity (RFID) tag readers. In the past, RFID tag readers have operated autonomously and without coordinating their actions with other RFID tag readers that are operating within the same environment. But collaboration among RFID tag readers can achieve several advantages and support use cases that isolated RFID tag readers cannot. In one use case, two or more RFID tag readers may collaborate and employ beam forming techniques to wirelessly transmit electromagnetic field power simultaneously in the direction of a difficult to read RFID tag. When receiving electromagnetic field power from two or more RFID tag readers simultaneously, a difficult to read RFID tag may energize and transmit its information wirelessly to the RFID tag readers.

In a second use case, two RFID tag readers may collaborate and track an RFID tag moving within an environment. A first one of the two RFID tag readers may operate in a control role, reporting on the location of the RFID tag to a central server that is managing inventory. A second one of the two RFID tag readers may operate in a standby role, monitoring communications of the moving RFID tag. As the RFID tag moves and is more suitably read by the second RFID tag reader, the second RFID tag reader assumes the control role and the standby role may transfer to the first RFID tag reader or to a third RFID tag reader. In this way, a sequence of RFID tag readers can collaborate to track movement of an RFID tag in an environment (for example in a retail store) and provide tracking information to the server application. If the RFID tag is heading out the doors of the environment without first passing through a checkout area, the central server may take some action, for example sounding an alert at the entrance of the retail store.

In a third use case, a plurality of RFID tag readers can collaborate in determining a location of an RFID tag by sweeping their antenna beams in an arc while transmitting sounding signals to the RFID tag configured in a backscatter response mode. Each RFID tag reader can determine an antenna beam angular direction at which the backscatter signal it receives from the RFID tag is strongest (greatest received signal strength indication (RSSI)). The RFID tag can be presumed to be located in the direction of the greatest received backscatter signal. Given a known location of each RFID tag reader, a location of the RFID tag can be determined based on the intersection of the angular direction from the RFID tag readers to the RFID tag. Additionally, the RSSI of the backscatter signal received at the RFID tag readers can be analyzed to determine an estimated distance from the first RFID tag reader to the RFID tag and to determine an estimated distance from the second RFID tag reader to the RFID tag. This information can be used to determine a location of the RFID tag to sufficient precision to find a product or package to which the subject RFID tag is affixed.

In an embodiment, the collaboration among RFID tag readers can be coordinated by an application executing on a server computer, for example coordinated by an inventory application executing on a server computer. In an embodiment, if a first RFID tag reader receives a stronger signal from an RFID tag than a second RFID tag reader, the application executing on the server can direct the first RFID tag reader to read the RFID tag. If there is interference in the environment, the application executing on the server can command a first RFID reader to power down its radio a little or to redirect its beam so that a second RFID reader can read from an RFID tag without suffering interference from the first RFID reader. Alternatively, the RFID tag readers may autonomously collaborate with each other unassisted by centralized control.

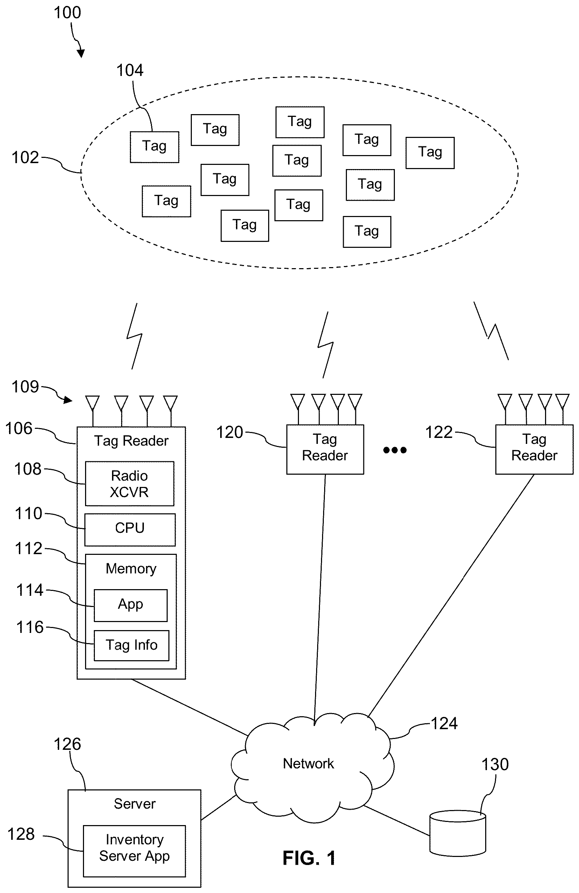

Turning now to FIG. 1, a system 100 is described. In an embodiment, the system 100 comprises an environment 102 that encompasses a plurality of RFID tags 104. The RFID tags 104 may be affixed to products and/or to packages containing products. The RFID tags 104 may be passive RFID tags that do not have on-board sources of electric power and harvest electric power from ambient electromagnetic fields. In an embodiment, the environment 102 may be a warehouse, a fulfillment center, a distribution center, a retail store, or another building storing items.

The system 100 also comprises a plurality of RFID tag readers, for example a first RFID tag reader 106, a second RFID tag reader 120, and a third RFID tag reader 122. It is understood that the RFID tag readers 106, 120, 122 may be considered to be located within the environment. While three RFID tag readers 106, 120, 122 are illustrated in FIG. 1, it is understood that the system 100 may comprise only two RFID tag readers. The system 100 may comprise four or more RFID tag readers and less than 200 RFID tag readers. One or more of the RFID tag readers 106, 120, 122 may emit an electromagnetic power field that RFID tags 104 may receive and use to harvest electric power.

The RFID tags 104 can be hailed by RFID tag readers 106, 120, 122 to transmit information that they store. For example, the information that the RFID tags 104 store may comprise one or more of an identity of a product (e.g., an electronic product code), an identity of an original equipment manufacturer (OEM) of the product, a date of manufacture of the product, a receipt date (e.g., a date the product was received into the environment 102), and an electronic serial number of the product (e.g., a tag identity (TID)). It is to be noted that the identification of the product of a given RFID tag 104 may be shared with a plurality of other RFID tags 104 (e.g., there may be many instances of the same model of smart phone in a fulfillment center) while the electronic serial number of the given RFID tag 104 may be unique. In an embodiment, the RFID information may comprise transaction information, such as transactions performed on a product associated with the RFID tag 104. These transactions may comprise moving the RFID tag 104 (and product to which the tag is affixed) within the environment 102, state changes of the RFID tag 104, and storage conditions experienced by the RFID tag 104 (and product to which the tag is affixed) such as temperature, humidity, irradiation by an ultraviolet source.

The RFID tags 104 can also be commanded to operate in a backscatter mode in which radio signals transmitted to the RFID tags 104 are reradiated or backscattered as if reflecting the radio signal. The RFID tag readers 106, 120, 122 may transmit a sounding signal to the RFID tags 104 when the tags are operated in a backscatter mode, whereby to determine a received signal strength indication (RSSI) of the backscatter signals and to analyze the RSSI of the backscatter signals to estimate a distance from the RFID tag reader 106, 120, 122 to the RFID tag 104. Here, the use of the term "sounding signal" derives from the nautical practice of "sounding" which involves measuring the depth of water using a lead line. In 5G cellular systems, a sounding signal may be transmitted by a base station to the user equipment (UE), whereby the UE is enabled to estimate the quality of the radio channel. A sounding signal, as used herein, is a radio signal that may be suited for stimulating a useful radio backscatter signal from the RFID tag 104. For example, a radio sounding signal may be a continuous, unvarying radio carrier signal or sinusoidal signal. A radio sounding signal may comprise a series of short-duration pulses of radio signal, wherein the radio signal is a continuous, unvarying carrier signal or sinusoidal signal.

In an embodiment, one or more of the RFID tag readers 106, 120, 122 may transmit electric power to RFID tags 104 in an electromagnetic field in the 860 MHz to 960 MHz frequency range. In an embodiment, one or more of the RFID tag readers 106, 120, 122 may transmit electric power to RFID tags 104 in an electromagnetic field in the 860 MHz to 870 MHz frequency range. In an embodiment, one or more of the RFID tag readers 106, 120, 122 may transmit electric power to RFID tags 104 in an electromagnetic field in the 862 MHz to 869 MHz frequency band. In an embodiment, one or more of the RFID tag readers 106, 120, 122 may transmit electric power to RFID tags 104 in an electromagnetic field in the 2.40 GHz to 2.55 GHz range. In an embodiment, one or more of the RFID tag readers 106, 120, 122 may transmit electric power to RFID tags 104 in an electromagnetic field in the 2.496 GHz to 2.5 GHz range.

In an embodiment, one or more of the RFID tag readers 106, 120, 122 may transmit radio sounding signals to RFID tags 104 in the 860 MHz to 960 MHz frequency range. In an embodiment, one or more of the RFID tag readers 106, 120, 122 may transmit radio sounding signals to RFID tags 104 in the 860 MHz to 870 MHz frequency range. In an embodiment, one or more of the RFID tag readers 106, 120, 122 may transmit radio sounding signals to RFID tags 104 in the 862 MHz to 869 MHz frequency range. In an embodiment, one or more of the RFID tag readers 106, 120, 122 may transmit radio sounding signals to RFID tags 104 in the 2.40 GHz to 2.55 GHz frequency range. In an embodiment, one or more of the RFID tag readers 106, 120, 122 may transmit radio sounding signals to the RFID tags 104 in the 2.496 GHz to 2.5 GHz frequency range.

In an embodiment, one or more of the RFID tag readers 106, 120, 122 may transmit command messages to RFID tags 104 in the 860 MHz to 960 MHz frequency range. In an embodiment, one or more of the RFID tag readers 106, 120, 122 may transmit command messages to RFID tags 104 in the 860 MHz to 870 MHz frequency range. In an embodiment, one or more of the RFID tag readers 106, 120, 122 may transmit command messages to RFID tags 104 in the 862 MHz to 869 MHz frequency range. In an embodiment, one or more of the RFID tag readers 106, 120, 122 may transmit command messages to RFID tags 104 in the 2.40 GHz to 2.55 GHz frequency range. In an embodiment, one or more of the RFID tag readers 106, 120, 122 may transmit command messages to the RFID tags 104 in the 2.496 GHz to 2.5 GHz frequency range. A command message may direct an RFID tag 104 to transmit its information or to change an internal state or memory value of the RFID tag 104.

The first RFID tag reader 106 comprises a radio transceiver 108, an antenna 109, a processor 110, and a memory 112. The memory 112 may store a tag reader application 114 in a non-transitory portion of the memory 112. The memory 112 may store, at least transiently and possibly non-transiently, tag information 116 received from RFID tags 104.

The antenna 109 may transmit and receive radio frequency (RF) signals while generating a focused antenna beam such that the gain of the antenna is greater in the direction of the antenna beam than the gain of the antenna in directions different from the direction of the antenna beam. In an embodiment, the antenna 109 comprises a plurality of antenna elements. In an embodiment, the antenna elements are a plurality of dipole antenna elements. In an embodiment, the antenna 109 is a slot antenna and the antenna elements are a plurality of slots, where each slot is an antenna element. In an embodiment, the antenna 109 comprises four antenna elements. In an embodiment, the antenna 109 comprises eight antenna elements. In an embodiment, the antenna 106 comprises from two antenna elements to forty antenna elements. In an embodiment, the antenna 106 comprises more than three antenna elements and fewer than twenty antenna elements. In an embodiment, the second RFID tag reader 120 and the third RFID tag reader 122 have the same components as the first RFID tag reader 106.

In an embodiment, the system 100 comprises a server computer 126 that executes an inventory server application 128. In an embodiment, the system 100 comprises a data store 130. The RFID tag readers 106, 120, 122 are able to communicate with the data store 130 and the server computer 126 and/or the inventory server application 128 via a network 124. The network 124 comprises one or more public networks, one or more private networks, or a combination thereof. In an embodiment, the sever computer 126 and the data store 130 are located within the environment 102. In another embodiment, however, the sever computer 126 and the data store 130 are located remotely from the environment 102.

The RFID tag readers 106, 120, 122 are able to collaborate with each other to interact with the RFID tags 104 in a variety of different ways. The RFID tag readers 106, 120, 122 may collaborate to achieve communication with a difficult to contact RFID tag 104, for example an RFID tag 104 that does not respond to hailing by a single RFID tag reader 106, 120, 122 or does not power up when electromagnetic field energy is transmitted to it from a single one of the RFID tag readers 106, 120, 122. The RFID tag readers 106, 120, 122 may collaborate to determine a location of an RFID tag 104 and/or to improve the precision of a location of the RFID tag 104. The RFID tag readers 106, 120, 122 may collaborate to track the motion of an RFID tag 104 within the environment 102, for example as a product or product package to which the RFID tag 104 is affixed moves within the environment 102.

In a first use case, the first RFID tag reader 106 and the second RFID tag reader 120 may direct their antenna beams towards a particular one of the RFID tags 102 that has not responded to a hailing call from the first RFID tag reader 106. It is understood that the first RFID tag reader 106 may direct its antenna beam in a first angular direction relative to the first RFID tag reader 106, the second RFID tag reader 120 may direct its antenna beam in a second angular direction relative to the second RFID tag reader 120, and the first angular direction may be different from the second angular direction, because the RFID tag readers 106, 120 are not co-located with each other, and hence the particular RFID tag 104 is located at a different bearing relative to the two different RFID tag readers 106, 120. The first RFID tag reader 106 and the second RFID tag reader 120 may then transmit electromagnetic field power (in the form of a radio transmission or RF signal transmission) towards the one of the RFID tags 102. The particular RFID tag 104 may not have previously received enough electromagnetic field energy to power up. When two RFID tag readers 106, 120 direct electromagnetic field energy towards the particular RFID tag 104, it may power on and transmit information it stores to the first RFID tag reader 106.

The inventory server application 128 may manage or control the collaboration of the RFID tag readers 106, 120 in the first use case, for example based on an understanding the inventory sever application 128 has of the location of the particular RIFD tag 104, of the location of the first RFID tag reader 106, and of the location of the second RFID tag reader 120. The inventory server application 128 may retain a record or map of the locations of the RFID tags 104 and of the RFID tag readers 106, 120, 122. The inventory server application 128 may store the locations in the data store 130. The inventory server application 128 may update locations of RFID tags 104 and/or RFID tag readers 106, 120, 122 in the data store 130 as any of these entities change within the environment 102. In an embodiment, the RFID tag readers 106, 120, 122 may be statically located within the environment such that their locations do not typically change. The locations of stationary RFID tag readers 106, 120, 122 may be configured into the data store 130 or written into the data store 130 by administrators of the system 100.

In a second use case, the first RFID tag reader 106 and the second RFID tag reader 120 may collaborate to direct their antenna beams towards a particular one of the RFID tags 104 to determine a location of that particular RFID tag 104. For example, the first RFID tag reader 106 may sweep its antenna beam in an arc towards the RFID tag 104 and then past the RFID tag 104, sending a sounding signal to the RFID tag 104 and receiving a backscatter signal from the RFID tag 104 at each of a plurality of angular directions. The first RFID tag reader 106 can analyze each of the backscatter signals it receives from the RFID tag 104 to determine a RSSI for that backscatter signal. The first RFID tag reader 106 can determine the strongest RSSI and impute the angular direction of the antenna beam associated with that strongest RSSI backscatter signal as the angular direction to the RFID tag 104 (e.g., the backscatter from the RFID tag 104 is strongest when the beam of the antenna of the first RFID tag reader 106 is directed at the RFID tag 104). From the angular direction and the strongest RSSI, the first RFID tag reader 106 can determine a first estimated location of the RFID tag 104 as a pair of polar coordinates (e.g., a radius combined with an angular direction). The second RFID tag reader 120 can follow a similar process to determine a second estimated location of the particular RFID tag 104. In an embodiment, the inventory server application 128 may coordinate the cooperation of the RFID tag readers 106, 120 to estimate the location of the particular RFID tag 104.

The RFID tag readers 106, 120 can share their respective estimates of the location of the particular RFID tag 104 with the inventory server application 128. The inventory server application 128 can determine an improved estimated location of the particular RFID tag 104 by using the known location of the first RFID tag reader 106, the known location of the second RFID tag reader 120, the estimated location of the RFID tag 104 produced by the first RFID tag reader 106, and the estimated location of the RFID tag 104 produced by the second RFID tag reader 120. In effect, the improved estimated location of the particular RFID tag 104 can average or combine the two estimated locations to arrive at an improved (e.g., more accurate) estimated location of the particular RFID tag 104. In an embodiment, three or more RFID tag readers 106, 120, 122 may each provide an estimated location of the particular RFID tag 104, and the inventory server application 128 can determine an improved estimated location of the particular RFID tag 104 based on the known location of those RFID tag readers 106, 120, 122 as well as the several estimated locations of the particular RFID tag 104 produced by these RFID tag readers 106, 120, 122.

The estimated location and/or improved estimated location of the RFID tag 104 may be stored in the data store 130. The inventory server application 128 may use the location of the RFID tag 104 (either the estimated location or improved estimated location) to inform a worker where to find the product associated with the particular RFID tag 104 to fulfill an order or to move the product to another location within the environment 102.

In a third use case, the RFID tag readers 106, 120, 122 may collaborate with each other to track the motion of RFID tags 104 within the environment 102. In an embodiment, the inventory server application 128 may create and store a map of coverage of the environment 102 provided by the RFID tag readers 106, 120, 122. This map of coverage may identify areas in the environment 102 for each RFID tag reader 106, 120, 122 where the given RFID tag reader can communicate with and receive backscatter signals from RFID tags 104. For example, the coverage may identify a first area within the environment 102 that the first RFID tag reader 106 can communicate with RFID tags 104 located in the first area, a second area within the environment 102 that the second RFID tag reader 120 can communicate with RFID tags 104 located in the second area, and a third area within the environment 102 that the third RFID tag reader 122 can communicate with RFID tags 104 located in the third area. It is understood that more than three RFID tag readers 106, 120, 122 may be included in the system 100 and that more than three coverage areas may be provided by the RFID tag readers. Some of the areas associated with some of the RFID tag readers 106, 120, 122 may somewhat overlap each other.

The inventory server application 128 may initiate a track of a particular RFID tag 104. The inventory server application 128 may command the first RFID tag reader 106 to monitor the location of the RFID tag 104, for example, to reiteratively determine the estimated location of the particular RFID tag 104 over time. In an embodiment, the first RFID tag reader 106 may determine the estimated location of the particular RFID tag 104 periodically, for example every second, every two seconds, every five seconds, every seven seconds, every ten seconds, every fifteen seconds, every twenty seconds, every twenty-five seconds, every thirty seconds, or some other periodic interval less than ten minutes. In an embodiment, the periodic interval may be adapted based on a rate of motion of the particular RFID tag 104. The inventory server application 128 may choose the first RFID tag reader 106 to track the particular RFID tag 104 because the location of the particular RFID tag 104 stored in the data store 130 indicates that the RFID tag 104 is located in the coverage area of the first RFID tag reader 106.

The inventory server application 128 may initially designate the first RFID tag reader 106 as an active tag tracker. The inventory server application 128 may designate the second RFID tag reader 120 as a standby tag tracker. In active tracking operation, an RFID tag reader 106, 120, 122 periodically determines an estimated location of the particular RFID tag 104 and sends this estimated location to the inventory server application 128. In standby tracking operation, an RFID tag reader 106, 120, 122 periodically determines an estimated location of the particular RFID tag 104 but does not send this estimated location to the inventory server application 128.

As the particular RFID tag 104 that is being tracked moves, the inventory server application 128 may designate a different RFID tag reader 106, 120, 122 to assume the active tracking role and another RFID tag reader 106, 120, 122 to assume the standby tracking role. For example, as the particular RFID tag 104 moves out of the first coverage area associated with the first RFID tag reader 106 and into the second coverage area associated with the second RFID tag reader 120, the inventory server application 128 may designate the second RFID tag reader 120 as the active tag tracker and designate the third RFID tag reader 122 as the standby tag tracker. In this example, the inventory server application 128 may also inform the first RFID tag reader 106 that it is no longer designated as the active tracker. In this way, as the particular RFID tag 104 moves through the environment 102, the inventory server application 128 may manage RFID tag readers 106, 120, 122 to collaborate to follow the changing location of the particular RFID tag 104.

It will be appreciated that while discussed as separate use cases, two or more of the kinds of RFID tag reader collaboration described above may be combined and employed within the same use case.

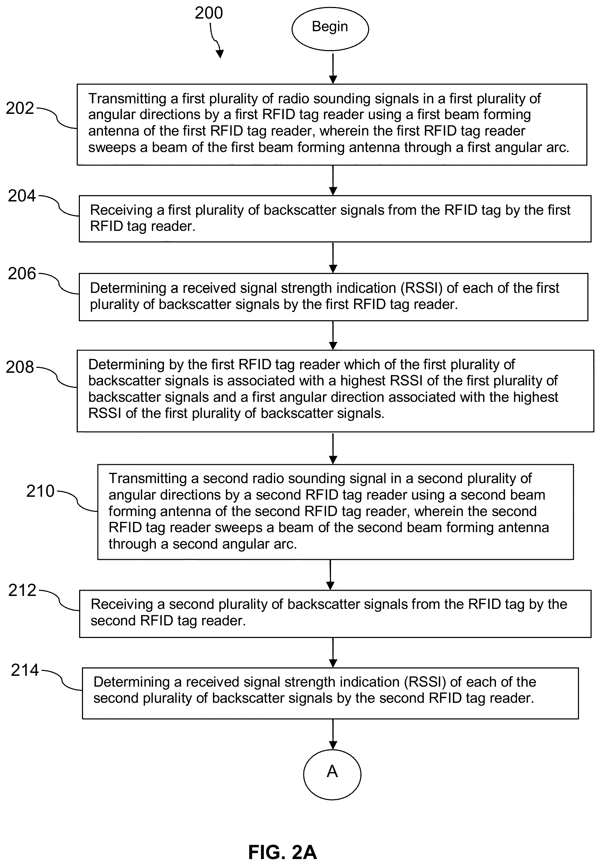

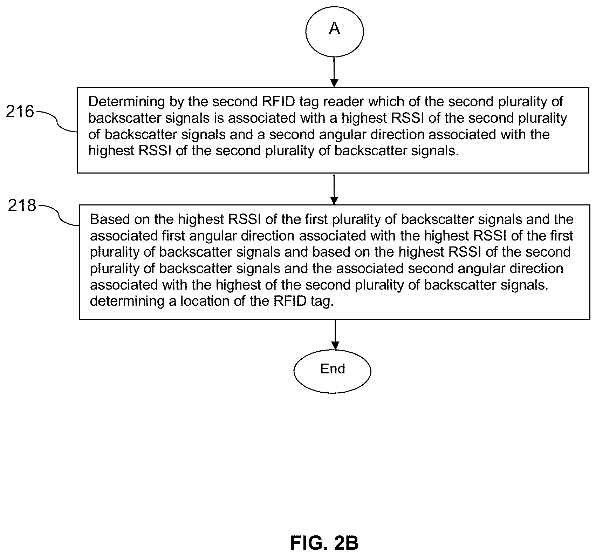

Turning now to FIG. 2A and FIG. 2B, a method 200 is described. In an embodiment, the method 200 is a method of locating a radio frequency identity (RFID) tag. At block 202, the method 200 comprises transmitting a first plurality of radio sounding signals in a first plurality of angular directions by a first RFID tag reader using a first beam forming antenna of the first RFID tag reader, wherein the first RFID tag reader sweeps a beam of the first beam forming antenna through a first angular arc. In an embodiment, the first beam forming antenna of the first RFID tag reader comprises four antenna elements. In an embodiment, the first beam forming antenna of the first RFID tag reader comprises more than four antenna elements and fewer than twenty antenna elements. In an embodiment, the first plurality of radio sounding signals are transmitted in the frequency range 860 MHz to 960 MHz. In an embodiment, the first plurality of radio sounding signals are transmitted in the frequency range 2.40 GHz to 2.55 GHz

At block 204, the method 200 comprises receiving a first plurality of backscatter signals from the RFID tag by the first RFID tag reader. At block 206, the method 200 comprises determining a received signal strength indication (RSSI) of each of the first plurality of backscatter signals by the first RFID tag reader.

At block 208, the method 200 comprises determining by the first RFID tag reader which of the first plurality of backscatter signals is associated with a highest RSSI of the first plurality of backscatter signals and a first angular direction associated with the highest RSSI of the first plurality of backscatter signals. In an embodiment, the method 200 further comprises the first RFID tag reader transmitting the highest RSSI of the first plurality of backscatter signals and the associated first angular direction associated with the highest RSSI of the first plurality of backscatter signals to an inventory server application executing on a computer system, for example the inventory server application 128.

At block 210, the method 200 comprises transmitting a second radio sounding signal in a second plurality of angular directions by a second RFID tag reader using a second beam forming antenna of the second RFID tag reader, wherein the second RFID tag reader sweeps a beam of the second beam forming antenna through a second angular arc. At block 212, the method 200 comprises receiving a second plurality of backscatter signals from the RFID tag by the second RFID tag reader. At block 214, the method 200 comprises determining a received signal strength indication (RSSI) of each of the second plurality of backscatter signals by the second RFID tag reader.

At block 216, the method 200 comprises determining by the second RFID tag reader which of the second plurality of backscatter signals is associated with a highest RSSI of the second plurality of backscatter signals and a second angular direction associated with the highest RSSI of the second plurality of backscatter signals. In an embodiment, the method 200 further comprises the second RFID tag reader transmitting the highest RSSI of the second plurality of backscatter signals and the associated second angular direction associated with the highest of the second plurality of backscatter signals to an inventory server application executing on a computer system, for example, the inventory server application 128.

At block 218, the method 200 comprises, based on the highest RSSI of the first plurality of backscatter signals and the associated first angular direction associated with the highest RSSI of the first plurality of backscatter signals and based on the highest RSSI of the second plurality of backscatter signals and the associated second angular direction associated with the highest of the second plurality of backscatter signals, determining a location of the RFID tag. In an embodiment, the processing of block 218 is performed by an inventory server application executing on a computer system.

In an embodiment, the method 200 further comprises the first RFID tag reader transmitting the highest RSSI of the first plurality of backscatter signals and the associated first angular direction associated with the highest RSSI of the first plurality of backscatter signals to an inventory server application executing on a computer system; and the second RFID tag reader transmitting the highest RSSI of the second plurality of backscatter signals and the associated second angular direction associated with the highest of the second plurality of backscatter signals to the inventory server application, wherein, determining the location of the RFID tag based on the highest RSSI of the first plurality of backscatter signals and the associated first angular direction associated with the highest RSSI of the first plurality of backscatter signals and based on the highest RSSI of the second plurality of backscatter signals and the associated second angular direction associated with the highest of the second plurality of backscatter signals is performed by the inventory server application.

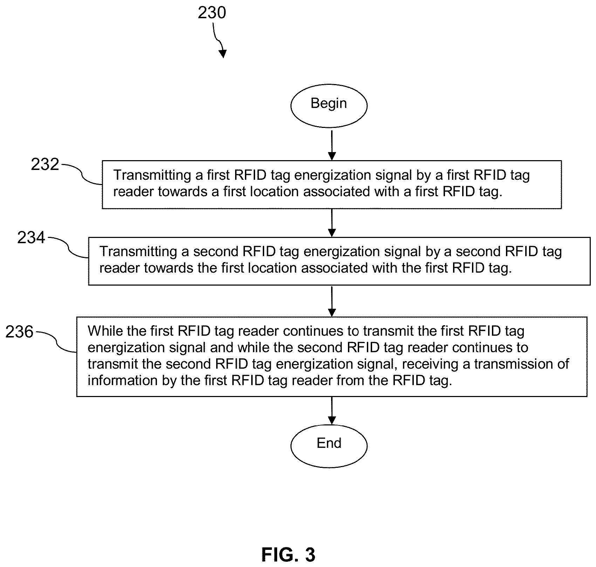

Turning now to FIG. 3, a method 230 is described. In an embodiment, method 230 is a method of reading a radio frequency identity (RFID) tag. At block 232, the method 230 comprises transmitting a first RFID tag energization signal by a first RFID tag reader towards a first location associated with a first RFID tag.

At block 234, the method 230 comprises transmitting a second RFID tag energization signal by a second RFID tag reader towards the first location associated with the first RFID tag. At block 236, the method 230 comprises, while the first RFID tag reader continues to transmit the first RFID tag energization signal and while the second RFID tag reader continues to transmit the second RFID tag energization signal, receiving a transmission of information by the first RFID tag reader from the RFID tag. In an embodiment, the first RFID tag energization signal and the second RFID tag energization signal are radio signals in the 860 MHz to 960 MHz frequency range.

In an embodiment, an inventory server application executing on a computer system commands the first RFID tag reader to transmit the first RFID tag energization signal and commands the second RFID tag reader to transmit the second RFID tag energization signal. In an embodiment, the transmission of information received by the first RFID tag reader from the RFID tag comprises two or more of an identity of a product, an identity of an original equipment manufacturer (OEM) of the product, a date of manufacture of the product, a receipt date of the product, and an electronic serial number of the product. In an embodiment, the transmission of information received by the first RFID tag reader from the RFID tag further comprises storage conditions experienced by the product.

In an embodiment, the first RFID tag reader uses a first beam forming antenna to transmit the first RFID tag energization signal, and the second RFID tag reader uses a second beam forming antenna to transmit the second RFID tag energization signal. In an embodiment, the first beam forming antenna comprises more than three antenna elements and fewer than 20 antenna elements.

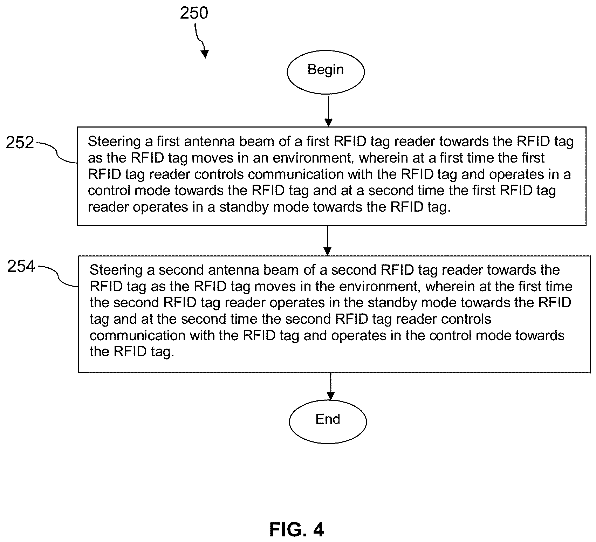

Turning now to FIG. 4, a method 250 is described. In an embodiment, the method 250 is a method of reading a radio frequency identity (RFID) tag. In an embodiment, the RFID tag is affixed to a product and the RFID tag stores information about the product including an identity of the product. At block 252, the method 250 comprises steering a first antenna beam of a first RFID tag reader towards the RFID tag as the RFID tag moves in an environment, wherein at a first time the first RFID tag reader controls communication with the RFID tag and operates in a control mode towards the RFID tag and at a second time the first RFID tag reader operates in a standby mode towards the RFID tag. In an embodiment, the first beam forming antenna of the first RFID tag reader comprises at least three antenna elements and fewer than twenty antenna elements. In an embodiment, the first RFID tag reader communicates with the RFID tag in the radio frequency range 860 MHz to 960 MHz.

At block 254, the method 250 comprises steering a second antenna beam of a second RFID tag reader towards the RFID tag as the RFID tag moves in the environment, wherein at the first time the second RFID tag reader operates in the standby mode towards the RFID tag and at the second time the second RFID tag reader controls communication with the RFID tag and operates in the control mode towards the RFID tag. In an embodiment, the second beam forming antenna of the first RFID tag reader comprises at least three antenna elements and fewer than twenty antenna elements. In an embodiment, the second RFID tag reader communicates with the RFID tag in the radio frequency range 860 MHz to 960 MHz.

It is understood that steering the first antenna beam of the first RFID tag reader towards the RFID tag as the RFID tag moves in the environment may comprise the first RFID tag reader determining the location of the RFID tag at multiple times, whereby to track the changing location of the RFID tag by the first RFID tag reader. Likewise, it is understood that steering the second antenna beam of the second RFID tag reader towards the RFID tag as the RFID tag moves in the environment may comprise the second RFID tag reader determining the location of the RFID tag at multiple times, whereby to track the changing location of the RFID tag by the second RFID tag reader. The processing of method 250 may further comprise the RFID tag reader that is operating in control mode of operation sending the current location of the RFID tag to an inventory server application executing on a computer system, whereby the inventory server application can follow the movement of the RFID tag within the environment. It is understood that the inventory server application may develop a holistic picture of the movement of the RFID tag in the environment by piecing together a sequence of locations of the RFID tag provided by different RFID tag readers that have operated in control mode at different times during the journey of the RFID tag.

In an embodiment, the environment is one of a warehouse, a fulfillment center, a distribution center, or a retail store. In an embodiment, an inventory server application executing on a computer system and communicating with the first RFID tag reader and the second RFID tag reader controls when the first RFID tag reader operates in the control mode, when the first RFID tag reader operates in the standby mode, when the second RFID tag reader operates in the standby mode, and when the second RFID tag reader operates in the control mode.

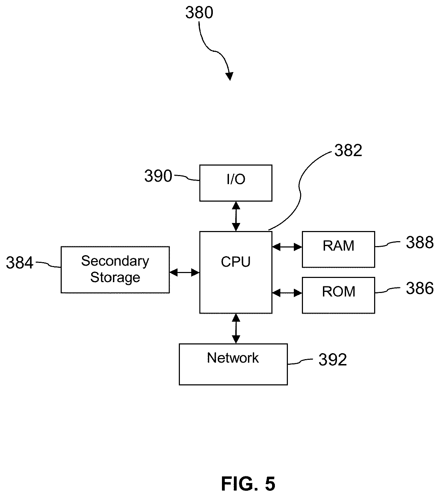

FIG. 5 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of locating a radio frequency identity (RFID) tag, comprising:
transmitting a first plurality of radio sounding signals in a first plurality of angular directions by a first RFID tag reader using a first beam forming antenna of the first RFID tag reader, wherein the first RFID tag reader sweeps a beam of the first beam forming antenna through a first angular arc;
receiving a first plurality of backscatter signals from the RFID tag by the first RFID tag reader;
determining a received signal strength indication (RSSI) of each of the first plurality of backscatter signals by the first RFID tag reader;
determining by the first RFID tag reader which of the first plurality of backscatter signals is associated with a highest RSSI of the first plurality of backscatter signals and a first angular direction associated with the highest RSSI of the first plurality of backscatter signals;
transmitting a second radio sounding signal in a second plurality of angular directions by a second RFID tag reader using a second beam forming antenna of the second RFID tag reader, wherein the second RFID tag reader sweeps a beam of the second beam forming antenna through a second angular arc;
receiving a second plurality of backscatter signals from the RFID tag by the second RFID tag reader;
determining a received signal strength indication (RSSI) of each of the second plurality of backscatter signals by the second RFID tag reader;
determining by the second RFID tag reader which of the second plurality of backscatter signals is associated with a highest RSSI of the second plurality of backscatter signals and a second angular direction associated with the highest RSSI of the second plurality of backscatter signals; and
based on the highest RSSI of the first plurality of backscatter signals and the associated first angular direction associated with the highest RSSI of the first plurality of backscatter signals and based on the highest RSSI of the second plurality of backscatter signals and the associated second angular direction associated with the highest of the second plurality of backscatter signals, determining a location of the RFID tag.

2. The method of claim 1, further comprising
the first RFID tag reader transmitting the highest RSSI of the first plurality of backscatter signals and the associated first angular direction associated with the highest RSSI of the first plurality of backscatter signals to an inventory server application executing on a computer system; and
the second RFID tag reader transmitting the highest RSSI of the second plurality of backscatter signals and the associated second angular direction associated with the highest of the second plurality of backscatter signals to the inventory server application,
wherein, determining the location of the RFID tag based on the highest RSSI of the first plurality of backscatter signals and the associated first angular direction associated with the highest RSSI of the first plurality of backscatter signals and based on the highest RSSI of the second plurality of backscatter signals and the associated second angular direction associated with the highest of the second plurality of backscatter signals is performed by the inventory server application.

3. The method of claim 2, further comprising:
transmitting a third radio sounding signal in a third plurality of angular directions by a third RFID tag reader using a third beam forming antenna of the third RFID tag reader, wherein the third RFID tag reader sweeps a beam of the third beam forming antenna through a third angular arc;
receiving a third plurality of backscatter signals from the RFID tag by the third RFID tag reader;
determining a received signal strength indication (RSSI) of each of the third plurality of backscatter signals by the third RFID tag reader;
determining by the third RFID tag reader which of the third plurality of backscatter signals is associated with a highest RSSI of the third plurality of backscatter signals and a third angular direction associated with the highest RSSI of the third plurality of backscatter signals,
wherein determining the location of the RFID tag by the inventory server application is further based on the highest RSSI of the third plurality of backscatter signals and the associated third angular direction associated with the highest RSSI of the third plurality of backscatter signals.

4. The method of any preceding claim, wherein the first beam forming antenna of the first RFID tag reader comprises four antenna elements or comprises more than four antenna elements and fewer than twenty antenna elements.

5. The method of any preceding claim, wherein the first plurality of radio sounding signals are transmitted in the frequency range 860 MHz to 960 MHz or 2.40 GHz to 2.55 GHz.

6. A method of reading a radio frequency identity (RFID) tag, comprising:
transmitting a first RFID tag energization signal by a first RFID tag reader towards a first location associated with a first RFID tag;
transmitting a second RFID tag energization signal by a second RFID tag reader towards the first location associated with the first RFID tag; and
while the first RFID tag reader continues to transmit the first RFID tag energization signal and while the second RFID tag reader continues to transmit the second RFID tag energization signal, receiving a transmission of information by the first RFID tag reader from the RFID tag.

7. The method of claim 6, wherein an inventory server application executing on a computer system commands the first RFID tag reader to transmit the first RFID tag energization signal and commands the second RFID tag reader to transmit the second RFID tag energization signal.

8. The method of claim 6 or 7, wherein the transmission of information received by the first RFID tag reader from the RFID tag comprises two or more of an identity of a product, an identity of an original equipment manufacturer (OEM) of the product, a date of manufacture of the product, a receipt date of the product, and an electronic serial number of the product; and wherein the transmission of information received by the first RFID tag reader from the RFID tag further comprises storage conditions experienced by the product.

9. The method of any one of claims 6 to 8, wherein the first RFID tag energization signal and the second RFID tag energization signal are radio signals in the 860 MHz to 960 MHz frequency range.

10. The method of any one of claims 6 to 9, wherein the first RFID tag reader uses a first beam forming antenna to transmit the first RFID tag energization signal, and the second RFID tag reader uses a second beam forming antenna to transmit the second RFID tag energization signal, wherein the first beam forming antenna comprises more than three antenna elements and fewer than 20 antenna elements.

11. A method of reading a radio frequency identity (RFID) tag, comprising:
steering a first antenna beam of a first RFID tag reader towards the RFID tag as the RFID tag moves in an environment, wherein at a first time the first RFID tag reader controls communication with the RFID tag and operates in a control mode towards the RFID tag and at a second time the first RFID tag reader operates in a standby mode towards the RFID tag; and
steering a second antenna beam of a second RFID tag reader towards the RFID tag as the RFID tag moves in the environment, wherein at the first time the second RFID tag reader operates in the standby mode towards the RFID tag and at the second time the second RFID tag reader controls communication with the RFID tag and operates in the control mode towards the RFID tag.

12. The method of claim 11, wherein an inventory server application executing on a computer system and communicating with the first RFID tag reader and the second RFID tag reader controls when the first RFID tag reader operates in the control mode, when the first RFID tag reader operates in the standby mode, when the second RFID tag reader operates in the standby mode, and when the second RFID tag reader operates in the control mode.

13. The method of claim 11 or 12, wherein the RFID tag is affixed to a product and wherein the RFID tag stores information about the product including an identity of the product.

14. The method of any one of claims 11 to 13, wherein the first beam forming antenna of the first RFID tag reader comprises at least three antenna elements and fewer than twenty antenna elements.

15. The method of any one of claims 11 to 14, wherein the first RFID tag reader communicates with the RFID tag in the radio frequency range 860 MHz to 960 MHz.
